# EUROPEAN PATENT APPLICATION

(11) **EP 4 438 467 A1**
(43) Date of publication of application: **02.10.2024**
(21) Application number: 23164860.1
(22) Date of filing: 28.03.2023
(51) Int. Cl.: B64C 13/04, B64C 13/50, B64C 13/18, B64C 29/00, B64D 31/04, B64D 27/24, B64C 39/12, B64C 3/32, B64C 9/18, B64C 11/00

(54) **FLIGHT CONTROL SYSTEM AND METHOD FOR A VTOL AIRCRAFT**

(71) Applicant: Lilium GmbH, 82234 Wessling (DE)
(72) Inventor: MARTINEZ MARTINEZ, Vicente, 82205 Gilching (DE); WILSON RODRIGUES, Fabio, Huntington Beach, 92648 (US); LIMA, Tiago, 82234 Wessling (DE); DODENHÖFT, Jens, 82234 Wessling (DE)
(74) Representative: Weickmann & Weickmann PartmbB

(57) **Abstract**

The present invention relates to a flight control system for a VTOL aircraft (10) defining an aircraft reference frame with a roll axis (Xb), a pitch axis (Yb) and a yaw axis (Zb), the flight control system comprising a first and a second manual control apparatus for inputting control commands by an operator, wherein the first manual control apparatus comprises a first stick member, wherein the first stick member is pivotable around first and second control axes with respect to a first neutral position, wherein the second manual control apparatus comprises a second stick member, wherein the second stick member is pivotable around third and fourth control axes with respect to a second neutral position, a flight control computer, which is connected to the first and second manual control apparatuses and configured to output flight control instructions based on pivot positions of the first and second stick members with respect to the first to fourth control axes, wherein the flight control computer is adapted to derive and output flight control instructions, while at least partially eliminating cross-coupling between the individual directions of motion for longitudinal motion control based on the pivot position of the first stick member with respect to the first control axis, for lateral motion control based on the pivot position of the first stick member with respect to the second control axis, for vertical motion control based on the pivot position of the second stick member with respect to the third control axis, and for directional motion control based on the pivot position of the second stick member with respect to the fourth control axis. The invention further relates to a VTOL aircraft (10) comprising such a flight control system.

## Description

The present invention relates to a flight control system for a VTOL aircraft defining an aircraft reference frame with a roll axis, a pitch axis and a yaw axis, as well as a VTOL aircraft comprising such a flight control system and a method for controlling the flight of said VTOL aircraft by means of the flight control system according to the invention.

While several generations of VTOL aircraft as well as other flying vehicles with VTOL capabilities, such as rotorcraft (helicopters) and unmanned drones, have been known for quite some time, recently developments have been made towards providing fully electrically VTOL aircraft with the capability of transporting passengers and/or cargo which are controlled by an onboard pilot. In this context, it is one of the main challenges when developing a flight control concept for such types of aircraft to achieve intuitive pilot controls that are easy and safe to operate in all flight modes and conditions including vertical takeoff and landing, hover flight and horizontal cruise or forward flight.

Previously known VTOL aircraft have for this purpose used different control strategies for vertical and forward flight, which has increased the mental workload of the pilot, since the pilot has had to adapt the way of flying and operating the controls of the aircraft depending on the airspeed regime. For example in the well-known Hawker Siddeley Harrier series of military aircraft, during hovering, the pilot has controlled the vertical motion of the aircraft with a dedicated throttle control member and the horizontal translation of the aircraft with a stick member. In contrast, during forward flight, the stick and throttle members have then been used as in a conventional aircraft, i.e. the climb rate and air speed have been adjusted by a combination of stick and throttle inputs by manipulating the pitch attitude of the aircraft by means of pulling and pushing the stick and controlling the thrust output of the engine, while roll or roll motion has been controlled with the stick in a conventional manner. Furthermore, a separate lever member had to be provided in order to control the nacelle angle of the engine and thus the direction of its thrust which hence had to be manually adjusted by the pilot when transitioning from vertical to forward flight and back. Additionally, in order to control the yaw of the aircraft, a pair of pedals has been provided in said type of aircraft which is operated in a similar manner as in conventional aircraft designs.

In certain examples of tilt rotor aircraft, a similar implementation has been used, except that the dedicated throttle lever member had been replaced by a "collective style lever" with vertical displacement instead of longitudinal displacement but with a similar function. In such examples of tilt rotor aircraft, a separate lever or switch has been provided for controlling the nacelle angle and thus the orientation of the engines and rotors with respect to the fuselage and wings of the aircraft, which had to be adjusted by the pilot when transitioning from vertical to forward flight. Furthermore, a pair of pedals was provided for controlling the yaw of the aircraft, which the pilot had to operate with his/her feet in a similar manner as already pointed out above for the Harrier.

In certain examples of rotorcraft such as some types of helicopters, during vertical flight, a "collective stick member", which is automatically coupled with an engine control device, has commanded the vertical axis motion of the aircraft while a "cyclic stick member" has controlled its horizontal translation. During phases of forward flight, the climb rate and air speed are in such examples controlled by a combination of the cyclic and the collective stick elements by means of adjusting the pitch attitude of the aircraft and the rotor lift, while a lateral maneuvering thereof is performed exclusively with the cyclic stick member.

Now referring to recent developments in the field, there is a wide consensus in the aircraft industry that changes in pilot input strategies depending on the current airspeed regime of such aircraft should be avoided in new generations of VTOL aircraft and in particular in so-called Urban Air Mobility VTOL aircraft, in order to reduce pilot workload, increase safety and reduce necessary pilot training. In this context, a so-called "unified control strategy" has been proposed and adopted for certain military aircraft, such as the Lockheed Martin F-35B. However, the strategies used in prior art unified control designs have several drawbacks, for example, in order to translate horizontally during vertical flight, the pilot must combine inputs on two different control elements which is more complicated than using a single controller with only one hand.

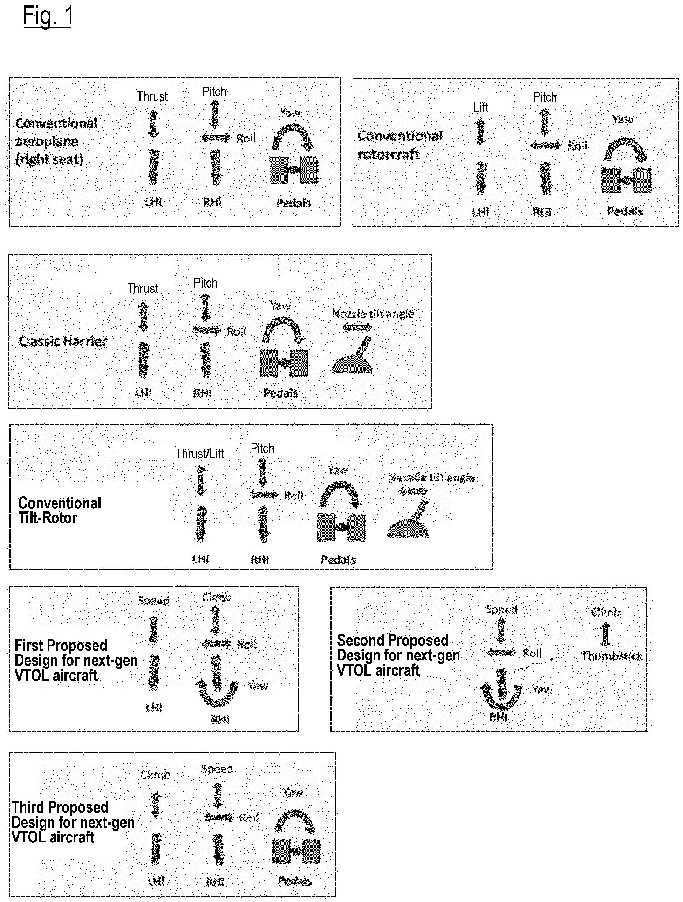

A non-exhaustive overview of the above-discussed control strategies in VTOL aircraft known in the art is given in Fig. 1, in which the respective control elements in a conventional airplane, a conventional rotorcraft, the Hawker Siddeley Harrier jet, a typical tilt-rotor aircraft and three proposed designs for next-generation VTOL aircraft are shown in a schematic and at least in part simplified manner. All of the designs discussed above and shown in Fig. 1 require a larger number of control elements to be handled by the pilot of the corresponding aircraft, such as a pair of foot pedals, a nozzle or nacelle tilt angle lever or an additional thumbstick provided at a regular stick member and/or exhibit suboptimal behavior during certain stages or conditions of typical VTOL flights. The illustrated control elements also all require an adaptation of different input strategies in different airspeed regimes of the corresponding aircraft.

It is therefore an object of the present invention to provide a flight control system as well as a flight control method that is intuitive and easy to operate by a single pilot without requiring substantial changes in the piloting technique when transitioning from vertical or hover to horizontal or forward flight and in particular without requiring the manipulation of multiple control elements to perform said transition from vertical to forward flight.

For this purpose, the flight control system according to the present invention comprises a first and a second manual control apparatus for inputting control commands by an operator, wherein the first manual control apparatus comprises a first stick member having a grip portion for being gripped by the operator, wherein the first stick member is mounted to a first base member to be pivotable around first and second control axes with respect to a first neutral position, and wherein the second manual control apparatus comprises a second stick member having a grip portion for being gripped by the operator, wherein the second stick member is mounted to a second base member to be pivotable around third and fourth control axes with respect to a second neutral position, the flight control system further comprising a flight control computer, which is connected to the first and second manual control apparatuses and configured to output flight control instructions based on pivot positions of the first and second stick members with respect to the first to fourth control axes, wherein the flight control computer is adapted to derive and output flight control instructions while at least partially eliminating cross-coupling between the individual directions of motion, for longitudinal motion control based on the pivot position of the first stick member with respect to the first control axis, for lateral motion control based on the pivot position of the first stick member with respect to the second control axis, for vertical motion control based on the pivot position of the second stick member with respect to the third control axis, and for directional motion control based on the pivot position of the second stick member with respect to the fourth control axis. There is thus no need for additional levers to achieve transition from vertical flight to forward flight or pedals for controlling the yaw behavior of the aircraft.

The flight control computer thus automatically controls aircraft effectors such as engines and control surfaces in order to achieve both a desired aircraft response following pilot inputs, in particular by eliminating cross-couplings between the individual axes or directions of motion, and an adaptation of the engine regime and control surface positions depending on the flight phase, such as vertical and forward flight.

In particular, according to the present invention, each control element always commands the same directions of motion of the aircraft regardless of its current flight phase or condition. Additionally, the flight control computer by evaluating the pilot inputs in a suitable manner further simplifies the piloting task by ensuring that the aircraft response to pilot inputs matches specific response types regardless of the aerodynamic regime, i.e. whether lift forces are created in the aircraft by directing engine thrust vertically or by aerodynamic surfaces such as contoured wings and/or flaps during horizontal flight.

In particular, with the flight control system as just introduced, there is no need for additional control elements such as rudder pedals, and the pilot station for this purpose is merely equipped with the two stick members which are sometimes also referred to as "inceptors" or "side-stick controllers". Each such inceptor has two degrees of freedom and may either be active (back-driven by electric motors) or passive(i.e. spring loaded). Aircraft motion is thus achieved by displacing the inceptors from their initial or neutral positions, wherein any response of the aircraft to input control instructions is at least partially directionally de-coupled based on the concrete implemented control strategy.

The flight control computer is hence adapted to receive the corresponding signals from the inceptors and to translate them into commands for the aircraft control effectors, such as aerodynamic control surfaces, engines, positioning devices for the engines with regard to the fuselage of the aircraft, etc., in order to achieve the desired aircraft response. These commands output by the flight control computer may in some cases depend on the current air speed regime of the aircraft or in a more general sense on the current flight condition of the aircraft. In particular, said commands may depend on whether the aircraft is currently in hover, transition or horizontal (forward) flight, since for example in order to change the altitude of the aircraft, different measures and strategies are necessary during the different flight phases. However, by outputting suitable commands to the aircraft control effectors in all conceivable stages and conditions of flight, the flight control computer is able to ensure that each control element always commands the same directions of motion of the aircraft regardless of its current flight phase or condition, thus simplifying the piloting task and reducing pilot mental workload when transitioning from vertical flight to forward flight and vice versa as well as in all other conceivable flight conditions.

It shall at this point also be mentioned that certain degrees of redundancy may be provided in the flight control system according to the present invention, such as in particular for the flight control computer, for which at least two independent units may be installed.

It shall further be pointed out that with the control strategy implemented with the flight control system according to the present invention, the pitch of the aircraft is never directly controlled by the pilot due to the fact that the longitudinal motion control and the vertical motion control of the aircraft are decoupled and assigned to different control axes of the first and second stick members. This is a fundamentally different approach to all previous fixed-wing aircraft designs and allows for a novel and improved control strategy in all flight configurations with the flight control computer determining what combination of angle of attack lift and direct lift (e.g. thrust) is required to achieve the desired aircraft response. For example, in vertical flight, in order to accelerate the aircraft upwards, the flight control computer may increase engine thrust while maintaining zero pitch angle. In forward flight, to achieve the same vertical acceleration, the computer may increase the pitch attitude to modify the angle of attack, thus generating additional aerodynamic lift, while simultaneously increasing direct lift, e.g. by increasing thrust.

Furthermore, in hover flight, any horizontal translation is commanded with a single stick member (the first stick member) and it is thus for example not necessary to combine inputs on two separate control elements to cause a diagonal movement of the aircraft, i.e. along the longitudinal and lateral directions simultaneously.

In this context, it shall also be pointed out that the roll, pitch and yaw axes of the aircraft may in hover flight substantially correspond to the horizontal and vertical directions with respect to the ground, however, in forward flight due to pitching and rolling of the aircraft to control its altitude and direction or course, the aircraft reference frame may substantially differ from the corresponding ground-based coordinate system. For this reason, in the following two separate coordinate systems will be used to explain further details of the present invention, the aircraft coordinate system, oftentimes also referred to as the aircraft body axes, with roll, pitch and yaw axes, which are also referred to as Xb, Yb and Zb axes as well as the so-called "follower axes". Said follower axes Xf and Yf are obtained by projecting the body axes Xb and Yb onto the horizontal plane. The Zf axis is always perpendicular to the Earth surface and pointing downward.. In this context, it shall further be stated that the lateral motion control based on the second control axis of the first stick member may always result in a motion around the Xb body axis and that the direction motion control based on the fourth control axis may always result in a motion around the Zf follower axis. It shall also be pointed out that the partial or complete elimination of cross-coupling between the individual directions of motion may be confined to certain flight modes at least for some of the directions, wherein in some embodiments, in particular the decoupling between the vertical motion control and at least one of the longitudinal, lateral and directional motion control may be upheld at all times.

In order to further improve the intuitive use of the flight control system according to the present invention, in the respective first and second neutral positions, the first and second stick members may be tilted with respect to one another, wherein preferably the first neutral position corresponds to an orientation of the first stick member substantially along the yaw axis of the aircraft (upright orientation), and the second neutral position corresponds to an orientation of the second stick member at angles with respect to both the roll axis and the yaw axis of the aircraft, preferably at angles in the range of 30° to 60°, further preferably substantially at 45°. Thus, the motion of each stick member or inceptor as input by the pilot of the aircraft matches the resulting motion of the aircraft.

By tilting the first and second stick members with respect to one another in their neutral positions, it becomes possible to enhance the intuitiveness of the use of the flight control system, since any movement of the second inceptor with respect to the third control axis thus may match the motion of the aircraft concerning the vertical direction, i.e. up and down. In particular, by positioning the second stick member at a 45° angle pointing forwards and upwards, by pushing the second stick member downwards, a vertical downward motion of the aircraft may be instructed, while pulling the second stick member upwards may result in an upwards motion of the aircraft.

In this context, it shall also be pointed out that the first and third control axes of the first and second stick members, respectively, may substantially correspond to the pitch axis or Yb axis of the aircraft, which results in a movement of the sticks along a forward-backward direction of the aircraft to be performed by the pilot in order to instruct corresponding longitudinal and vertical motion control commands. However, it is also conceivable to tilt the corresponding control axes with respect to the aircraft reference frame, for example in order to improve the usability of the flight control system according to the invention with respect to anatomic features of the pilot. It shall further be pointed out that in order to facilitate access to the pilot's seat, one of the stick members and in particular a forward-tilted second stick member may be embodied as a so-called "swoop inceptor", which may be housed in an armrest portion of the corresponding base member when the pilot has not yet entered the seat and may only be moved to its operational position once the pilot is seated in the corresponding pilot's seat.

As already briefly mentioned above, the flight control computer of the flight control system according to the present invention may be adapted to derive the flight instructions for the different directional motion controls based on certain principles, which may or may not vary between different flight modes and conditions of the aircraft, in particular concerning the current airspeed range of the aircraft as detected by dedicated sensor units providing corresponding data to the flight control computer.

For example, the flight control computer may be adapted to derive and output the flight instructions for vertical motion control as Altitude Rate Command instructions, preferably over the entire airspeed range of the aircraft. Herein, the altitude rate relates to the ground reference frame, such that a corresponding operation of the second stick member with respect to the third control axis can be translated to a sink or climb rate of the aircraft during some or all of the possible flight modes and airspeed ranges thereof. Alternatively, in a high airspeed range of the aircraft, the flight instructions for vertical motion control may be output as load factor or FPA (flight path angle) rate commands.

The flight control computer may be adapted to set an altitude rate to zero when the second stick member is in its neutral position with respect to the third control axis. Thus, the neutral position in such examples corresponds to a state of the manual control apparatus, in which altitude rates remain constant at zero. Alternatively, the neutral positions may refer to operational conditions, in which the corresponding rates are kept constant at a non-zero value.

Additionally or alternatively, the flight control computer may be adapted to derive and output the flight instructions for longitudinal motion control as translational rate command (TRC) instructions at least over part of the airspeed range of the aircraft, in particular at least a low airspeed range. Again, in this context, the translational rate of the aircraft relates to a ground reference frame, such that in certain embodiments a corresponding operation of the first stick member with respect to the first control axis will lead to changes in the translational rate of the aircraft. In particular, TRC may controlled by the first and second control axes of the first stick member such that the first axis stick displacement is proportional to the X component of the ground velocity vector in follower axes and that the second axis stick displacement is proportional to the y component of the ground velocity vector in follower axes.

Additionally or alternatively, the flight control computer may be adapted to derive and output the flight instructions for longitudinal motion control as linear (kinematic) acceleration in the x follower axis. Additionally, the flight control computer may be adapted to derive and output the flight instructions to maintain a constant airspeed even in presence of atmospheric disturbance ("speed hold") with the stick on neutral, at least over part of the airspeed range of the aircraft, in particular a high airspeed range.

It is furthermore also conceivable that the flight control computer may be adapted to derive and output the flight instructions for longitudinal motion control as Airspeed Rate Command instructions at least over part of the airspeed range of the aircraft, in particular the high airspeed range.

Additionally or alternatively, the flight control computer may be adapted to derive and output the flight instructions for lateral motion control as Bank Angle command instructions, i.e. around the Xb body axis, which can be used for all aircraft speeds. Alternatively, roll rate command also around the Xb body axis can be used, but only at high speeds, as it is not very practical in vertical flight close to the ground.

The flight computer may also be adapted to derive and output the flight instructions for directional motion control as Heading Rate command instructions at least over part of the airspeed range of the aircraft, in particular a low airspeed range. For example, the Heading Rate command around the Z follower axis may be used at low speeds, while at high speeds, there may be three possible options for the commands, namely delta heading rate, i.e. a difference between the actual heading rate and the kinematic heading rate associated to a bank angle in a coordinated turn, n_{y} (lateral acceleration in body axes) and angle of sideslip.

All three of these options guarantee turn coordination, that is, when the pilot commands bank angle or roll rate in the lateral axis, while holding the directional inceptor on neutral, the resulting banked turn will be coordinated in that there is zero sideslip and/or zero n_{y}.. It is obvious that by suitably combining the different control strategies for the individual motion controls, sophisticated flight maneuvers such as decrabbing can easily be performed with just the two stick members and without the need for further input elements. Additionally, the flight control computer may be adapted to derive and output the flight instructions to maintain a constant heading in hovering flight, even in presence of atmospheric disturbance ("heading hold") with the stick in its neutral position.

It shall in this context also be pointed out that the flight control computer may further be adapted to evaluate a transition speed value between the low airspeed range and the high airspeed range based on the ground speed or the calibrated airspeed of the aircraft. By determining such a transition speed value, the different behavior of the aircraft concerning sets of control instructions may be defined and different aircraft control effectors suitable for achieving the desired aircraft response may be identified for the different airspeed ranges. Herein, the term "transition speed value" may also refer to a transition speed range in which a stepwise or continuous transition is implemented for the control instructions output by the flight control computer. In particular, a so-called "blending" of different control commands may be performed over a transition speed range, e.g. as a linear function of speed, in which a low-speed control strategy is continuously blending to a high-speed control strategy.

As an additional safety measure, the flight control computer may further be adapted to perform at least one of a flight envelope protection for vertical motion control by setting upper and lower limits for angle of attack, climb rate, sink rate, a load factor, pitch angle and/or flight path angle, a flight envelope protection for longitudinal motion control by setting upper and lower limits for maximum forward airspeed and maximum rearward airspeed or groundspeed, if rearward airspeed cannot reliably measured or estimated, and a flight envelope protection for lateral and directional motion control by setting upper and lower limits for bank angle, lateral acceleration and angle of sideslip. Such means for envelope protection of the aircraft serve for preventing the aircraft of ever reaching an unstable or unsafe condition, such as for example a stall of the aircraft during forward flight. For this purpose and in order to achieve the desired effect, input ranges of the stick members may be dynamically limited in case of active inceptors and/or other measures may be taken in order to ensure adherence to limits of a safe flight envelope at all times.

As an additional safety measure, in case of detected control effector failures or loss of sensor data, the flight control computer may reconfigure automatically in order to adapt to the particular failure condition. In some cases, this may result in some of the features described above no longer being available. For example, in case of a loss of angle of attack data, angle of attack protection may no longer be available, and in case of a loss of ground speed data, the translational rate command may be lost as well.

Furthermore, the flight control system according to the present invention may comprise at least one sensor unit, which is operatively connected to the flight control computer and adapted to output data representing at least one motion parameter of the aircraft, wherein the flight control computer is further adapted to modify the flight control instructions based on the received sensor output data. Said data may for example comprise velocities, accelerations and other motion parameter of the aircraft, which thus allows for creating a control feedback loop for optimizing control and behavior of the aircraft while taking into account internal and external factors such as component performance and weather conditions.

According to a second aspect, the present invention relates to a VTOL aircraft, having an aircraft reference frame with a roll axis or Xb, a pitch axis or Yb and a yaw axis or Zb and comprising a fuselage, a pair of main wings, a pair of canard wings, a plurality of propulsion units, in particular electrically driven ducted fan engines, which are distributed on the main wings and the canard wings, and a flight control system according to the present invention as described above, wherein the propulsion units are arranged to be pivotable about at least one axis along a predefined angular position range, wherein both of the angular positions and the RPM of the propulsion units are individually controllable by the flight control system.

Herein, one or more of the propulsion units may be mechanically connected to the respective main or canard wing by means of flaps, which are pivotable with respect to the respective wing and serve both as interfaces between the corresponding pairs of wings and propulsion units and aerodynamic surfaces, while the propulsion units are individually controllable concerning their RPM. Thus, the aircraft according to the present invention has the ability to perform a wide variety of flight maneuvers by employing vectored thrust by controlling both the flap angles and engine RPM. The aircraft according to the present invention for this purpose may be provided with a fly-by-wire system in which the flight control computer as mentioned above serves as a central computing unit receiving sensor and control input and outputting suitable control commands to the aircraft control effectors including the engines and flap angle adjusting motors.

In particular, the aircraft according to the present invention may be adapted to transition between a hover flight mode, in which the required lift is mainly produced by vertical thrust of the propulsion units, and a forward flight mode, in which the required lift is mainly produced aerodynamically by the main wings and the canard wings. Herein, the hover flight mode may also be referred to as a vertical flight mode and the forward flight mode may also be referred to as a horizontal or cruise flight mode.

In this context, the flight control system of the VTOL aircraft according to the present invention may further be adapted to level the aircraft at a substantially constant pitch angle in hover flight mode and in forward flight mode, modify the pitch angle of the aircraft.

According to a third aspect, the present invention relates to a method for controlling the flight of a VTOL aircraft according to the present invention by means of a flight control system according to the present invention, comprising the steps of evaluating current pivot positions of the first and the second stick members with respect to the first to fourth control axes, deriving a flight control strategy based on the pivot positions of the first and second stick members concerning longitudinal motion control, lateral motion control, vertical motion control and directional motion control, and controlling at least the propulsion units of the aircraft according to the flight control strategy, in particular the angular position and the RPM of the propulsion units, preferably exclusively controlling the propulsion units in such a manner.

Thus, in particular in embodiments of aircraft according to the present invention, in which flaps carrying the propulsion units also serve as aerodynamic surfaces, additional control surfaces may become redundant and all required flight maneuvers may be performed by exclusively controlling the propulsion units in the just described manner concerning their orientation and thrust output. It shall also be pointed out that the features of the flight control system as described above may also be interpreted to refer to methods, which may be performed by corresponding components of the flight control system, such that in the context of the present application, features of dependent device and method claims shall be considered to be interchangeable.

Further features and advantages of the present invention will become even clearer from the following description of embodiments thereof, when viewed together with the accompanying drawings. These show in particular:
- Fig. 1: schematic illustration of control elements of different types of aircraft known in the art;
- Fig. 2: a schematic isometric view of an electrical propulsion VTOL aircraft according to the present invention;
- Fig. 3a: a schematic illustration of different types of motion of the aircraft of Fig. 2 in hover and low speed flight conditions;
- Fig. 3b: a schematic illustration of different types of motion of the aircraft of Fig. 2 in cruise flight conditions;
- Fig. 4: a schematic side view of a pilot's seat and respective control elements in the aircraft of Fig. 2;
- Fig. 5: a schematic illustration of the control elements of Fig. 4;
- Fig. 6: a schematic overview of the flight control system of the aircraft of Fig. 2;
- Fig. 7: a schematic illustration of flight control commands in the flight control system of Fig. 6;
- Fig. 8: schematic illustrations of aircraft responses to the longitudinal and lateral flight control commands of Fig. 7; and
- Fig. 9: schematic illustrations of aircraft responses to the vertical and directional flight control commands of Fig. 7.

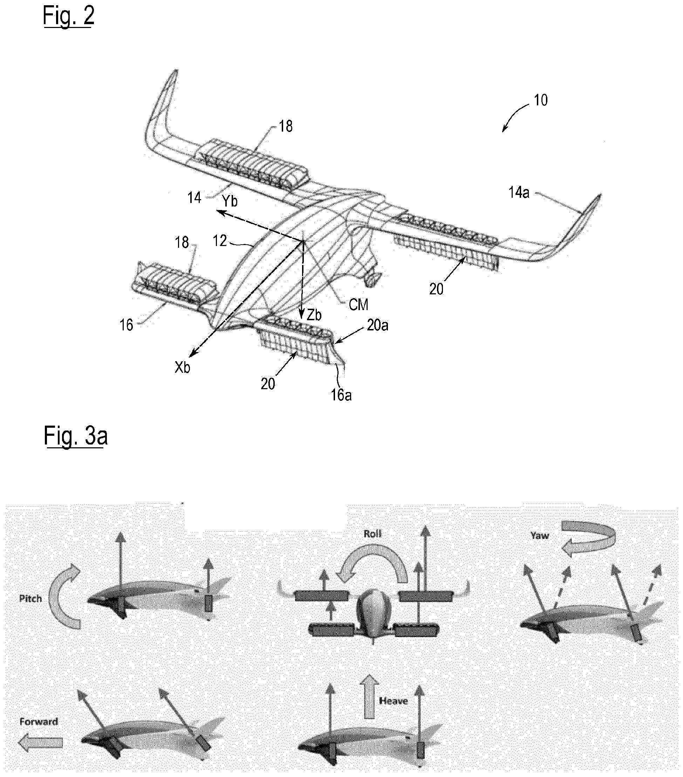

In Fig. 2, an electrical propulsion VTOL aircraft according to the present invention is shown in a schematic isometric view and generally denoted with reference numeral 10. The aircraft 10 comprises a fuselage 12 which houses a cockpit for a single pilot as well as a passenger cabin and a variety of components and systems required for the operation of the aircraft 10, such as high capacity rechargeable batteries and flight control and avionics systems.

The aircraft 10 further comprises a pair of main wings 14 and a pair of canard wings 16 positioned in front of the main wings 14 with respect to a front-rear direction of the aircraft 10. Said front-rear direction corresponds to a roll or Xb axis of the aircraft and together with a pitch or Yb axis and a yaw or Zb axis forms an aircraft reference frame of the aircraft 10 with respect to its center of mass CM. It shall be noted that the main wings 14 as well as the canard wings 16 extend substantially in parallel to the Yb axis and that the main wings 14 have a longer wingspan than the canard wings 16 and are provided with winglets 14a at their wingtips whereas the winglets 16a of the canard wings 16 are provided to the outermost flap 20 described below and are as such pivotable with respect to the respective canard wing 16 itself.

Both of the main and canard wings 14 and 16 are shaped such that in forward flight substantially along the Xb axis of the aircraft 10, they can provide for aerodynamic lift thus enabling energy-efficient horizontal or cruise flight in which thrust of the aircraft 10 is mainly directed along its Xb axis. For providing said thrust, both the main and canard wings 14 and 16 are each equipped on their trailing edges with a plurality of electrically driven ducted fan engines 18 serving as propulsion units of the aircraft 10. Said engines 18 are mounted on flaps 20 in a manner pivotable with respect to the corresponding main or canard wing 14, 16 around a pivot axis extending substantially parallel to the Yb axis of the aircraft 10. Therein, each individual engine 18 may be provided on an individual flap 20 or multiple engines 18 may be provided on a single flap 20, for example groups of two or three engines 18 on each flap 20.

Furthermore, by pivoting the flaps 20 by means of flap actuators 20a provided as interfaces between the respective flap 20 and the corresponding main or canard wing 14, 16 in such a manner that the engine thrust is directed downward along the Zb axis of the aircraft 10, vertical take-off and landing becomes possible as well as hover and low-speed flight. In order to transition between hover and forward flight, the aircraft has to pass through a transition flight phase, in which the aircraft transitions between a state in which its lift is mainly produced by downward-pointing thrust of the engines and a state in which its lift is mainly produced by the aerodynamic effect of the main and canard wings 14 and 16. It shall also be pointed out that the flaps 20 not only serve as a means for interfacing the engines 18 to the main and canard wings 14, 16 but also as aerodynamic control surfaces which contribute to the controllability of the aircraft 10 in addition to the thrust of the engines 18.

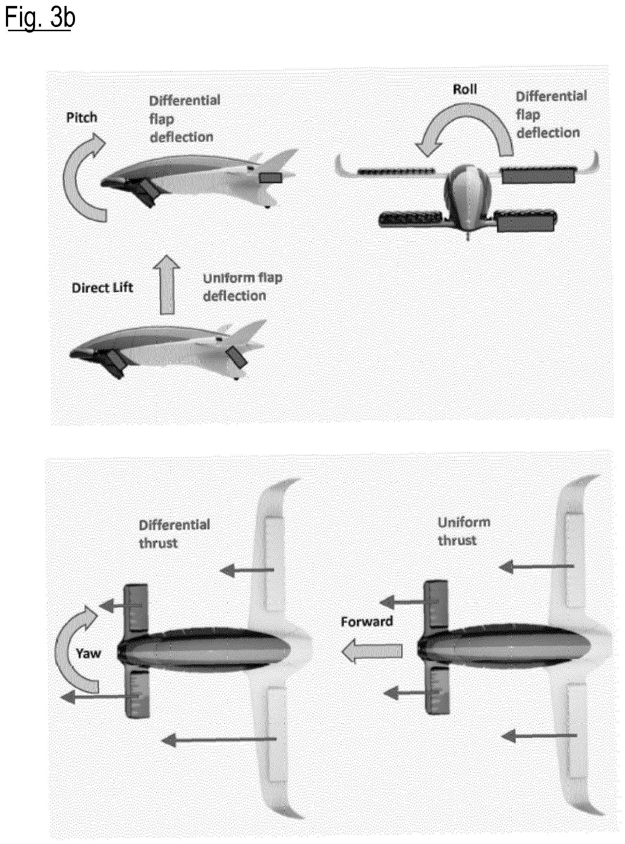

Now referring to Fig. 3a and 3b, based on the differential thrust of the engines 18, different types of motion of the aircraft are schematically illustrated for hover and low speed conditions and cruise or high speed conditions, respectively. It can be seen that in hover flight, pitch, roll and yaw of the aircraft 10 can be controlled by pivoting the respective flaps of the main wings 14 and canard wings 16 and controlling the engines 18 to provide different absolute thrust values, for example by commanding different RPM. Furthermore, it can also be seen that a forward motion along the Xb axis of the aircraft 10 in low speed conditions does not require a pitch angle change but can be achieved by directing the thrust of the engines 18 of the main and canard wings 14 and 16 in a suitable manner. Similarly, in order to change the altitude of the aircraft, i.e. to heave it, the thrust of the engines 18 simply has to be directed downward along the Zb axis and adjusted to a suitable absolute value, while the aircraft 10 can stay substantially level in a horizontal plane in a ground-based reference frame.

In contrast and as can be understood from Fig. 3b, in horizontal or forward flight, i.e. a high airspeed range, the flaps 20 are substantially aligned with the profiles of the main wings 14 as well as the canard wings 16 and lift is provided by aerodynamic forces of the main wings 14, canard wings 16 and to some extend the fuselage 12. Under such conditions, pitch and roll of the aircraft 10 are controlled by adjusting flap positions in a similar way as in a conventional canard/wing airplane. However, yaw of the aircraft may still be controlled through differential thrust by providing higher absolute thrust values either with the right hand or left hand side engines 18.

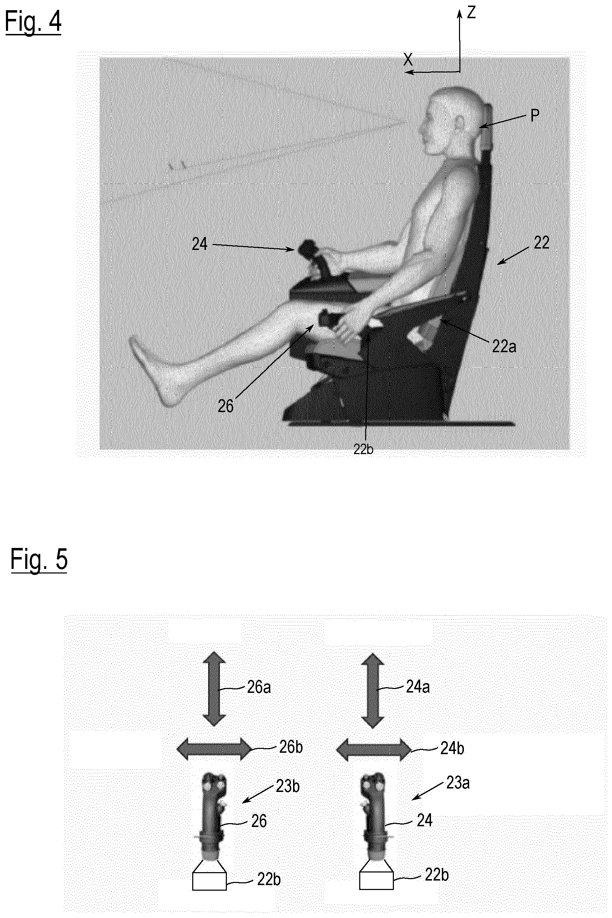

Now with reference to Fig. 4, a schematic side view of a pilot's seat 22 and respective control elements in the aircraft 10 is provided. The pilot P is seated in the pilot seat 22 heading in a forward direction along the Xb axis of the aircraft 10, wherein the pilot seat 22 is provided with two armrests 22a in an anatomically suitable manner. Both armrests 22a are in turn provided with stick members 24 and 26 with respective grip portions to be gripped by the pilot. Said stick members 24 and 26 together with respective first and second base members 22b form first and second manual control apparatuses 23a, 23b as schematically shown in Fig. 5 for inputting control commands in order to be able to control the aircraft 10 to perform flight maneuvers such as the ones illustrated in Fig. 3a and 3b.

Therein, the right hand side stick member is in the following referred to as a first stick member 24 and the left hand side stick member is referred to as a second stick member 26. It can be seen in Fig. 4 that while the first stick member 24 in its neutral position is pointing substantially upwards or along the Zb axis of the aircraft 10, the second stick member 26 is tilted with respect to the first stick member 24 in such a manner that it is pointing forward at for example substantially a 45° angle. It shall further be pointed out that in particular the second stick member 26 may be embodied as a so-called "swoop inceptor", which may be housed in the corresponding armrest 22a when the pilot has not yet entered the pilot seat 20 and may only be moved to the operational position shown in Fig. 4 once the pilot is sat down.

With reference to Fig. 5, the control elements 24, 26 of the aircraft 10 as just described as well as possible control inputs are shown in schematic manner. Both stick members 24 and 26 are mounted to respective base members 22b, which can for example be integrated with the armrests 22a, in such manner that they are each pivotable around two respective control axes, wherein the respective base members 22b may further comprise electronics components for evaluating the current pivot positions of the stick members 24 and 26 and for outputting corresponding data to the flight control computer 30 discussed below.

For the first stick member 24, a forward-back movement corresponds to a pivoting around a first control axis 24a and a left-right movement corresponds to a pivoting around a second control axis 24b, while for the second stick member 26, a forward-backward movement corresponds to a pivoting around a third control axis 26a and a left-right movement corresponds to a pivoting around a fourth control axis 26b. With the second stick member 26 in its neutral position being tilted in a direction forward and upward, it can be understood that a pivoting of said second stick member 26 around the third control axis 26a by the pilot is also perceived as pushing down and pulling up the second stick member 26 in a forward and backward movement thereof, respectively.

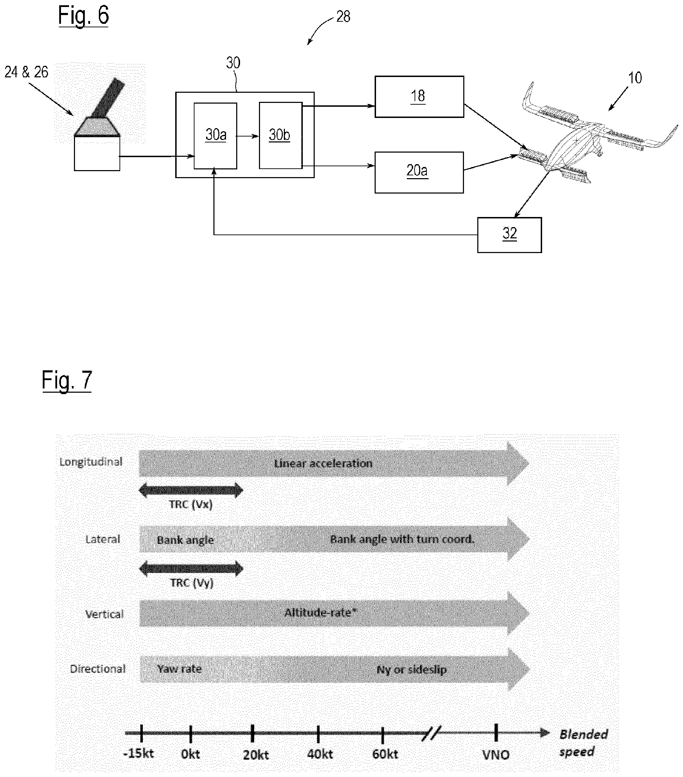

While later on and with reference to Fig. 7 to 9, the possible flight control commands which can be performed with the stick members 24 and 26 as well as the corresponding aircraft responses will be explained in detail, reference shall first be made to Fig. 6 in which a schematic overview of the flight control system 28 of the aircraft 10 is given. Said flight control system 28 comprises the first and second stick members 24 and 26 as manual control apparatuses, a flight control computer 30 and a plurality of sensor units 32, wherein the flight control computer 30 is adapted to output flight control instructions to aircraft control effectors, in particular the engines 18 of the aircraft as well as electrical motors serving as flap actuators 20a for pivoting the flaps 20 with respect to the main and canard wings 14 and 16.

During flight operation of the aircraft 10, the respective pivot positions of the first and second stick members 24, 26 with respect to the first to forth control axes 24a, 24b, 26a, 26b are forwarded to and evaluated by the flight control computer 30, in particular taking account the current airspeed as well as attitude of the aircraft 10, its angular rates, angular accelerations and linear accelerations as represented by the output data from the sensor units 32 in such a way that the flight control computer is able to output flight control instructions to the engines 18 and the flap actuators 20a, wherein for both the hardware and software, different levels of redundancy may be foreseen.

Depending on the airspeed data provided by the sensor units 32, which may for example comprise INS/GNSS sensors, the flight control computer 30 will instruct the aircraft control effectors to perform flight maneuvers, such as for example as illustrated in Fig. 3a and 3b. Therein, based on the sensor output, a feedback loop may be provided with the flight control computer 30 evaluating the output data from the sensor units 32 concerning whether the motion of the aircraft 10 has changed as expected and instructed or whether additional flight control instructions are necessary in order to achieve the desired motion state of the aircraft 10.

Now with reference to Fig. 7 to 9 schematic illustrations of flight control commands in the flight control system 28 of Fig. 6 as well as of aircraft responses to said flight control commands are given.

Therein, in Fig. 7, an example implementation of flight control commands in the present invention is given as a graph, in which the corresponding flight instructions output by the flight control computer are shown relative to the blended speed of the aircraft which is determined based on suitable sensor output data provided to the flight control computer. Herein, the blended speed serving as a particular measure for the speed of the aircraft is defined in a low ground speed range as the ground speed itself, while for intermediate to high speed values, the blended speed is defined as the calibrated airspeed. This choice of the blended speed as a functional parameter for the flight control computer is due to the fact that at low airspeed, no measurement of the calibrated airspeed may be available, such that using the ground speed in this range may be more robust. It may also make more sense to define changes between commands based on ground speed instead of based on airspeed. For example, the introduction of turn coordination should occur at a given groundspeed rather than airspeed since for example in case of hover flight with headwind it is not desired that turn coordination would be active. It shall however be pointed out that in other variants of the present invention, the respective commands may also be adapted as a function of ground speeds only or alternatively of calibrated airspeeds only.

In the given example of Fig. 7, the flight control instructions for longitudinal motion control over the entire speed range are output as linear acceleration commands or airspeed rate commands or Translational Rate commands depending on the current pivot position of the first stick member with respect to the first control axis. Concerning lateral motion control and thus control inputs via the first stick member with respect to the second control axis, a bank angle flight control command is output by the flight control computer. It shall also be pointed out that in a further possible variant of the present invention, for high values of blended speed, the output command may refer to a roll rate instead of a bank angle.

Furthermore, the flight control commands concerning vertical motion control in the example of Fig. 7 based on the pivot position of the second stick member with respect to the third control axis are given as Altitude Rate Command instructions over the entire blended speed range, while in alternative embodiments, for high values of the blended speed, a transition from Altitude Rate Command instructions to load factor of FPA rate instructions may be made. The transition value between the two control strategies may be in the range of about 20 to 60 knots of blended speed and it shall be pointed out that at low blended speed, changes in the altitude rate of the aircraft may be performed at a substantially constant pitch angle of the aircraft.

Lastly, the directional motion control based on the pivot position of the second stick member with respect to the fourth control axis in the example of Fig. 7 is implemented with heading rate command instructions at low blended speeds, wherein in the region of a blended speed between 20 and 60 knots, a transition to a different strategy is performed where there are three possible options for the commands, namely a delta heading rate referring to a difference between the actual heading rate and the kinematic heading rate associated to a bank angle in a coordinated turn, n_{y}, e.g. a lateral acceleration in body axes, or angle of sideslip. All three of said options guarantee that in turn coordination, that is, when the pilot commands bank angle or roll rate in the lateral axis, while holding the directional inceptor on neutral, the resulting banked turn will be coordinated with zero sideslip and zero n_{y}.

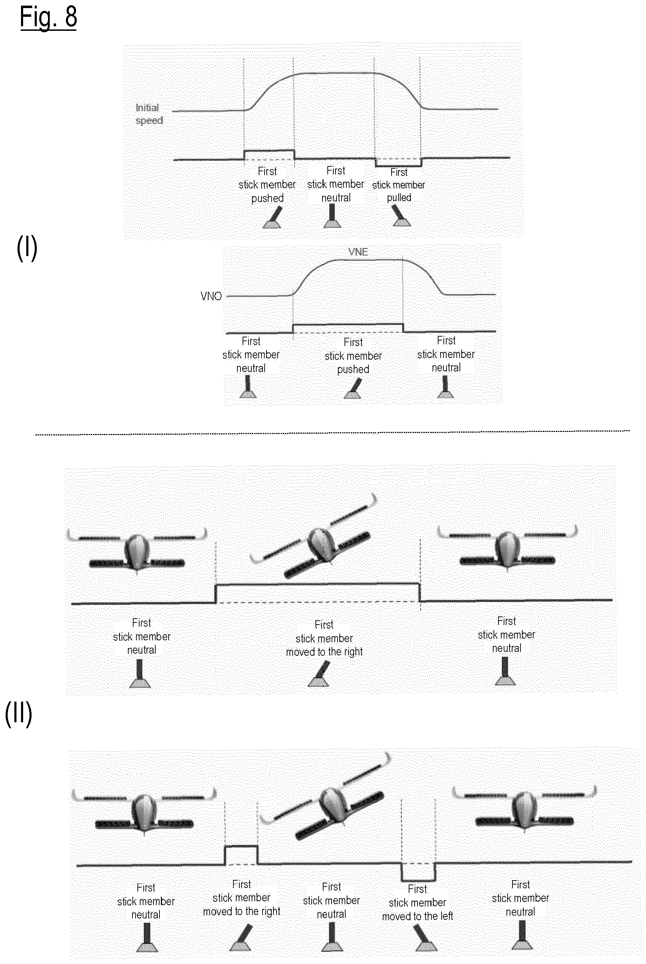

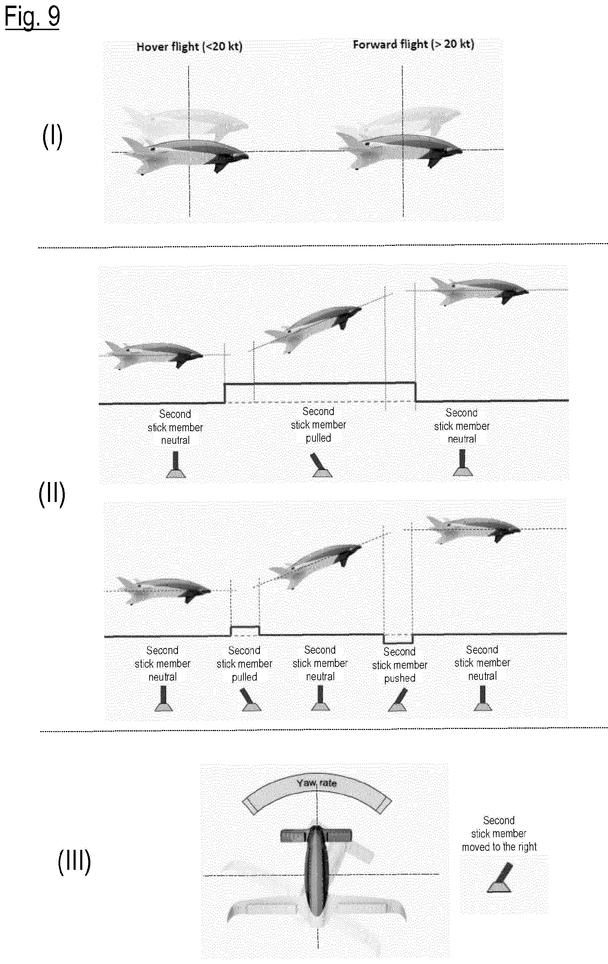

Based on the respective control strategy for the four control axes, the flight control computer will cause suitable responses by the control effectors of the aircraft in order to achieve the motion control instructed by the pilot. Several examples of schematic illustrations of aircraft responses to the flight control commands are now given with respect to Fig. 8 and 9. Therein, in panel (I) of Fig. 8, a first graph is shown which represents the response of the aircraft to an operation of the first stick member with respect to the first control axis when the airspeed rate command is active. It can be seen that with the stick member in its neutral position, the airspeed will remain constant in calm air while by pushing and pulling the first stick member, the speed of the aircraft can be increased or reduced. In case of atmospheric disturbance or during dynamic maneuvers, small changes in speed may occur, for which the pilot can compensate by applying a corresponding input to the first stick member with respect to its first control axis. Alternatively, a "speed hold" feature may be implemented, such that, with the stick on neutral, the aircraft will maintain constant airspeed even in presence of atmospheric disturbance.

It shall also be pointed out that an overspeed protection may be implemented in the longitudinal motion control as illustrated by the second graph in panel (I) of Fig. 8 as a flight envelope protection measure. Therein, once the airspeed of the aircraft exceeds an upper limit for maximum forward speed, even though a corresponding input is given to further increase the airspeed, the flight control computer will limit the airspeed such that the aircraft stabilizes at VNE with the stick full forward or at VNO with the stick on neutral..

Now referring to panel (II) of Fig. 8, the difference between a control of the aircraft based on bank angle command instructions and based on roll rate command instructions is explained. Therein, in the first graph it is shown that in an airspeed domain in which bank angle command instructions are employed, with the first stick member in neutral position concerning its second control axis, the aircraft automatically levels in a substantially horizontal orientation, while in the airspeed domain in which roll rate command instructions are employed, the aircraft in the absence of any control input and with the first stick member in its neutral position remains at a constant roll or bank angle. It shall be pointed out that also for this lateral motion control, certain measures of flight envelope protection may be provided, for example concerning maximum allowable roll rates and/or bank angles, which may in particular depend on the current airspeed of the aircraft.

Panel (I) of Fig. 9 now illustrates different strategies employable in the present invention with respect to vertical motion control. First of all, it is shown that during hover flight with a blended speedof for example less than 20 knots, only direct lift provided by vertically oriented thrust of the engines is used for vertical motion control such that by increasing or decreasing RPM of the engines and thus their thrust, vertical acceleration of the aircraft and a change in its altitude can be achieved while maintaining the aircraft at substantially zero pitch angle. On the other hand, in forward flight with a blended speed of above 20 knots, gradually angle of attack lift is used additionally. Thus, at low speeds, vertical acceleration is achieved at zero pitch angle and at higher speeds, vertical acceleration is achieved by a combination of pitch and therefore angle of attack and direct lift..

The flight control computer of the aircraft according to the present invention is adapted to translate corresponding vertical motion control commands entered with the second stick member into suitable flight control instructions with which depending on the current airspeed of the aircraft, a pivoting of the flaps carrying the engines and/or a change in the output thrust of the engines will be caused. For this purpose, in panel (II) of Fig. 9, the difference between an altitude rate based vertical motion control and a load factor or FPA-rate based vertical motion control is explained. In case the flight control computer outputs altitude rate command instructions, a change in aircraft altitude is effected only if the second stick member is displaced from its neutral position whereas when the second stick member in its neutral position, the flight control computer will always bring the aircraft back to level flight. On the other hand, in case the flight control computer outputs load factor or FPA-rate command instructions, a displacement of the second stick member with respect to the third control axis will command a change in the climb rate of the aircraft which will remain constant once the second stick member is returned to its neutral position. Thus, in order to again reduce the climb rate and bring the aircraft to level flight, the pilot has to manually decrease the climb rate by means of a reciprocal motion of the second stick member until it reaches zero.

In this context, different strategies for flight envelope protection with respect to the vertical motion control may be employed, for example upper and lower limits for angle of attack, climb rate, sink rate, load factor, pitch angle and/or flight path angle may be set by the flight control computer and implemented on the input commands of the pilot.

With respect to directional motion control, reference shall briefly be made to panel (III) of Fig. 9, in which it is illustrated that in hover flight, directional motion control is performed by displacing the corresponding pilot input with respect to the fourth control axis at the second stick member to a heading rate command while the aircraft is kept in a substantially horizontal orientation. Additionally, a "heading hold" feature may be implemented so that, in hovering flight, when the stick on neutral, the aircraft maintains constant heading even in presence of atmospheric disturbance. In forward flight, the control strategy may progressively be blended into n_{y} or sideslip command instructions issued by the flight control computer.

## Claims

1. Flight control system (28) for a VTOL aircraft (10) defining an aircraft reference frame with a roll axis (Xb), a pitch axis (Yb) and a yaw axis (Zb),
the flight control system (28) comprising:
- a first and a second manual control apparatus (23a, 23b) for inputting control commands by an operator (P);
wherein the first manual control apparatus (23a) comprises:
∘ a first stick member (24) having a grip portion for being gripped by the operator (P);
wherein the first stick member (24) is mounted to a first base member (22b) to be pivotable around first and second control axes (24a, 24b) with respect to a first neutral position;
wherein the second manual control apparatus (23b) comprises:
∘ a second stick member (26) having a grip portion for being gripped by the operator (P);
wherein the second stick member (26) is mounted to a second base member (22b) to be pivotable around third and fourth control axes (26a, 26b) with respect to a second neutral position;
- a flight control computer (30), which is connected to the first and second manual control apparatuses (23a, 23b) and configured to output flight control instructions based on pivot positions of the first and second stick members (24, 26) with respect to the first to fourth control axes (24a, 24b, 26a, 26b);
wherein the flight control computer (30) is adapted to derive and output flight control instructions, while at least partially eliminating cross-coupling between the individual directions of motion:
∘ for longitudinal motion control based on the pivot position of the first stick member (24) with respect to the first control axis (24a);
∘ for lateral motion control based on the pivot position of the first stick member (24) with respect to the second control axis (24b);
∘ for vertical motion control based on the pivot position of the second stick member (26) with respect to the third control axis (26a); and
∘ for directional motion control based on the pivot position of the second stick member (26) with respect to the fourth control axis (26b).

2. Flight control system (28) according to claim 1,
wherein in the respective first and second neutral positions, the first and second stick members (24, 26) are tilted with respect to one another, wherein preferably the first neutral position corresponds to an orientation of the first stick member (24) substantially along the yaw axis (Zb) of the aircraft (10) and the second neutral position corresponds to an orientation of the second stick member (26) at angles to both the roll axis (Xb) and the yaw axis (Zb) of the aircraft (10), preferably at angles in the range of 30° to 60°, further preferably substantially at 45° degree.

3. Fight control system (28) according to claim 1 or 2,
wherein the first and third control axes (24a, 26a) substantially correspond to the pitch axis (Yb) of the aircraft.

4. Flight control system (28) according to any of the preceding claims,
wherein the flight control computer (30) is adapted to derive and output the flight instructions for vertical motion control as Altitude Rate Command instructions, preferably over an entire airspeed range of the aircraft (10).

5. Flight control system (28) according to any of the preceding claims,
wherein the flight control computer (30) is adapted to derive and output the flight instructions for longitudinal motion control as Translational Rate Command Instructions at least over part of the airspeed range of the aircraft (10), in particular a low airspeed range.

6. Flight control system (28) according to claim 4 or claim 5,
wherein the flight control computer (30) is adapted to set a translational rate and/or an altitude rate to zero while the corresponding first and/or second stick member (24, 26) is in its neutral position with respect to the first or third control axis (24a, 26a).

7. Flight control system (28) according to any of the preceding claims,
wherein the flight control computer (30) is adapted to derive and output the flight instructions for longitudinal motion control as Airspeed Rate Command Instructions at least over part of the airspeed range of the aircraft (10), in particular a high airspeed range.

8. Flight control system (28) according to any of the preceding claims,
wherein the flight control computer (30) is adapted to derive and output the flight instructions for lateral motion control as a Bank Angle Command and/or to derive and output the flight instructions for directional motion control as a Heading Rate Command at least over part of the airspeed range of the aircraft (10), in particular a low airspeed range.

9. Flight control system (28) according to any of claims 4 to 7,
wherein the flight control computer (30) is further adapted to evaluate a transition speed value between the low airspeed range and the high airspeed range based on the groundspeed or the calibrated airspeed of the aircraft.

10. Flight control system (28) according to any of the preceding claims,
wherein the flight control computer (30) is further adapted to perform at least one of:
- flight envelope protection for vertical motion control by setting upper and lower limits for angle of attack, climb rate, sink rate, load factor, pitch angle and/or flight path angle;
- flight envelope protection for longitudinal motion control by setting upper and lower limits for maximum forward airspeed and maximum rearward airspeed;
- flight envelope protection for lateral and directional motion control by setting upper and lower limits for bank angle, lateral acceleration and angle of sideslip;
and/or wherein in case of detected control effector failures or loss of sensor data, the flight control computer (30) reconfigures automatically in order to adapt to the particular failure condition.

11. Flight control system (28) according to any of the preceding claims, further comprising at least one sensor unit (32) which is operatively connected to the flight control computer (30) and adapted to output data representing at least one motion parameter of the aircraft (10),
wherein the flight control computer (30) is further adapted to modify the flight control instructions based on the received sensor output data.

12. VTOL aircraft (10), having an aircraft reference frame with a roll axis (Xb), a pitch axis (Yb) and a yaw axis (Zb) and comprising:
- a fuselage (12);
- a pair of main wings (14);
- a pair of canard wings (16);
- a plurality of propulsion units (18), in particular electrically driven ducted fan engines, which are distributed on the main wings (14) and the canard wings (16); and
- a flight control system (28) according to any of the preceding claims; wherein the propulsion units (18) are arranged to be pivotable about at least one axis along an angular position range, wherein both of the angular position and the thrust output of the propulsion units (18) are individually controllable by the flight control system (28).

13. VTOL aircraft (10) according to claim 11,
wherein the aircraft is adapted to transition between a hover flight mode, in which the required lift is mainly produced by vertical thrust of the propulsion units (18), and a forward flight mode, in which the required lift in mainly produced aerodynamically by the main wings (14) and canard wings (16).

14. VTOL aircraft (10) according to claim 12,
wherein the flight control system (28) is further adapted to:
- level the aircraft (10) at a substantially constant pitch angle,
- in forward flight mode, modify the pitch angle of the aircraft (10) .

15. Method for controlling the flight of a VTOL aircraft (10) according to any of claims 12 to 14 by means of a flight control system (28) according to any of claims 1 to 11,
comprising the steps of:
- evaluating current pivot positions of the first and second stick members (24, 26) with respect to the first to fourth control axes (24a, 24b, 26a, 26b);
- deriving a flight control strategy based on the pivot positions of the first and second stick members (24, 26) concerning longitudinal motion control, lateral motion control, vertical motion control and directional motion control;
- controlling at least the propulsion units (18) of the aircraft (10) according to the flight control strategy, in particular the angular position and the thrust output of the propulsion units (18), preferably exclusively controlling the propulsion units (18).
